# EUROPEAN PATENT APPLICATION

(11) **EP 3 663 937 A1**
(43) Date of publication of application: **10.06.2020**
(21) Application number: 18209902.8
(22) Date of filing: 03.12.2018
(51) Int. Cl.: G06F 16/9035, G06F 16/583

(54) **CLOUD BASED INFORMATION RETRIEVAL SYSTEM FOR INDUSTRIAL AUTOMATION ENVIRONMENT**

(71) Applicant: Siemens Aktiengesellschaft, 80333 München (DE)
(72) Inventor: SINGH, Aayushi, 800001 Patna, Bihar, UP (IN)
(74) Representative: Isarpatent

(57) **Abstract**

An information retrieval system (211), a method (100), and a computer program product for retrieving industrial data based on one or more graphical objects (209A-209N) such as, icons representing one or more industrial assets (208A-208N) in a cloud computing environment (200) are provided. The method (100) employs the information retrieval system (211) to receive (100A) image data associated with at least one of the graphical objects (209A-209N) from a user device (210), identify (100B) the graphical object (209A-209N) based on the image data, obtain (100E) the industrial data associated with the identified graphical object (209A-209N), from an industrial database (206), and provide (100H) the industrial data associated with the identified graphical object (209A-209N) on the user device (210) .

## Description

The present invention generally relates to industrial automation systems, and more particularly, to an information retrieval system for remote operator assistance of industrial systems.

Typically, operators and other users interact with industrial automation systems, for example, to facilitate performing manual operations of an industrial automation system and/or monitoring or managing machines or processes associated with the industrial automation system. For example, operators and other users can interact with industrial devices, industrial processes, control programs, human machine interfaces (HMIs), etc., associated with the industrial automation system, to facilitate operation of the industrial automation system. Some operators or users can have more experience than other operators or users, which often can translate into the experienced operators or users being better performing operators or users in connection with the industrial automation system. Also, regardless of the amount of experience in industrial automation, some operators or users can perform better than other operators or users with respect to the industrial automation system. As a result, an industrial automation system, or portion thereof, typically can operate more efficiently when certain operators or users are working with, monitoring, or managing the industrial automation system, or portion thereof, than when other operators or users are working with, monitoring, or managing the industrial automation system, or portion thereof.

Typically information systems providing assistance, that is, help documentation, for the operators in an industrial automation environment are provided along with the industrial automation software being used by the operators, which is not portable, so the users are dependent on a computer system where the programming software is installed in order to access the information about various industrial automation devices. This doesn't allow a user to refer to the information system to know about, for example, controls, alarms, and/or other project related terminologies on the spot, when he/she is working inside a factory, that is, away from the computer system on which the software is installed. Moreover, the aforementioned issue of operator knowhow still exists because the operator is expected to know the terms that will fetch him/her relevant information. If he/she is not conversant, for example, with some of the icons being displayed on the industrial automation software itself, then, the only possible way out, is to note down his/her doubts, seek assistance from colleagues well-versed with the help documentation, and refer to this information later while he/she is out in the industrial facility, thereby, making this entire process cumbersome and time-consuming.

For new operators and field engineers, it is very tough to address these situations. They are unable to acknowledge any critical alarms. Moreover, if a person has newly joined a company then he/she may find it difficult to understand the terminologies used inside the industry as different industries follow different terminologies. Furthermore, the information systems provided typically employ traditional searching algorithms thereby making them slow and complicating in access to the information. Also, data is typically stored locally which requires additional memory.

Therefore, it is an object of the present invention to provide a method, a system, and a computer program product that makes information associated with industrial automation devices, available to users, remotely, agnostic to a particular industry or a plant set up, and with minimal time and effort required from the user.

The aforementioned object is achieved in the present invention, by providing an information retreival system, a method, and a computer program product for retrieving industrial data based on one or more graphical objects in a cloud computing environment. As used herein, "industrial data" refers to information pertaining to engineering, commissioning, and/or maintenance of industrial assets in an industrial automation environment. The industrial data comprises real time data and historical data. Advantageously, the industrial data comprises information about industrial assets from a plurality of industrial plants, thus, making the industrial data universal across various organizations and plant setups. Also used herein, "graphical objects" refer to software representations comprising, for example, icons, images, etc., of industrial assets. Advantageously, a graphical object comprises a representation of one or more industrial assets, and a representation of one or more parameters associated with the industrial assets. The representation of an industrial asset is, for example, an image of the industrial asset. The representation of a parameter associated with an industrial asset is, for example, an alarm condition associated with the industrial asset.

The method disclosed herein comprises, receiving image data associated with at least one of the graphical objects from a user device. The image data comprises, for example, a scanned image of the graphical object received from a user device. The image data is constructed of a foreground image data and a background image data. The foreground image data comprises the graphical object. The background image data comprises auxiliary data associated with the graphical object, for example, environment surrounding the graphical object, a timestamp data, a geo-spatial data, etc. The image data may also comprise, for example, a two dimensional, a three dimensional, and/or a multi-dimensional image of the graphical object. According to an embodiment of the present invention, the method receives the image data via one or more of a plurality of modalities including a text input, an audio input, a video input, etc. Also, used herein, the user device comprises, for example, a personal computing device, a workstation, a client device, a network enabled computing device, any other suitable computing equipment, and combinations of multiple pieces of computing equipment. The user device may also comprise, for example, a wearable device such as an augmented reality enabled wearable enabling the wearer to visualize the industrial data associated with the graphical object. Advantageously, the user device is a portable electronic device enabling its user to retrieve industrial data remotely, from an industrial database. As used herein, "industrial database" refers to a storage unit of information pertaining to industrial assets collected from a plurality of sources across various industrial plants of various organizations.

The method disclosed herein comprises, identifying the graphical object based on the image data by processing the image data to obtain the foreground image data and the background image data, and determining a retrieval context associated with background image data. Obtaining the foreground image data and the background image data comprises, for example, using image processing algorithms such as image segmentation algorithms known to a person skilled in the art. The method uses the foreground image data as the graphical object and the background image data as metadata associated with the graphical object. The metadata provides for a retrieval context. As used herein, "retrieval context" refers to intention of a user using the user device with which he/she seeks retrieval of the industrial data. For example, when the foreground image data includes an icon representing an alarm and the background image data includes a programmable logic controller (PLC) located on a boiler of a turbine in a power plant setup, then a retrieval context derived from the environment and/or geo-spatial background image data, may include industrial data about a control parameter tied to the alarm such as a burner temperature along with information required to be monitored of peripheral alarms connected thereto such as a turbine speed alarms, in order to maintain plant operation safety. Similarly, when the background image data includes a graphical user interface of an industrial automation engineering system configuring warnings in a plant at a particular time stamp, then a retrieval context derived from the time stamp as well as the environment background image data, may include industrial data about a control parameter tied to the alarm such as a pressure of a pump along with alarm configuration data such as a warning alarm, and an alarm shelving action required to be initiated such as disabling the alarm tentatively as the alarm is intended to display warnings at a particular time instant, for example, indicating duration for which the pump has been running. Thus, the method employs use of the background image data to identify retrieval context associated with an alarm in various applications.

The method disclosed herein comprises, obtaining the industrial data associated with the identified graphical object, from the industrial database by obtaining a user profile associated with the user device, and accessing the industrial database based on the foreground image data that is the graphical object, the background image data that is the retrieval context, and/or the user profile. As used herein, "user profile" refers to a role of the user accessing the industrial database. For example, a user having a profile of a commissioning supervisor is allowed access to entire industrial database whereas a user having a profile of trainee engineer is allowed limited access to the industrial database. The user profile is mapped to each user device and/or to login credentials of an account used by the user. Thus, the method comprises obtaining industrial data in layers of details based on the graphical object, the retrieval context and/or the user profile.

The method disclosed herein comprises, providing the industrial data associated with the identified graphical object on the user device, by rendering the industrial data in an interactive or a non-interactive format on the user device. Advantageously, the method renders the industrial data in a two dimensional, a three dimensional, or a multi-dimensional format on the user device. According to another embodiment of the present invention, the method renders the industrial data as a projection using an augmented reality device.

According to the present invention, also disclosed herein is an information retrieval system, comprising a memory unit and at least one processor communicatively coupled to the memory unit. The memory unit refers to all computer readable media, for example, non-volatile media, volatile media, and transmission media except for a transitory, propagating signal. The memory unit stores computer program instructions defined by modules of the information retrieval system and the processor executes these computer program instructions. The processor refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor may also be implemented as a processor set comprising, for example, a general purpose microprocessor and a math or graphics coprocessor.

The modules comprise a data reception module, an object identification module, a data retrieval module, and a data provision module. The data reception module receives image data associated with at least one of the graphical objects from a user device. The object identification module identifies the graphical object based on the image data. The object identification module comprises an image data processing module processing the image data to obtain a foreground image data and a background image data, and a context determination module determining a retrieval context associated with background image data. The data retrieval module obtains the industrial data associated with the identified graphical object, from an industrial database by obtaining a user profile associated with the user device, and accessing the industrial database based on the foreground image data, the background image data, and/or the user profile. The data provision module provides the industrial data associated with the identified graphical object on the user device by rendering the industrial data in an interactive and/or a non-interactive format on the user device.

The information retrieval system, according to the present invention, is installed on and accessible by a user device as a cloud based information retrieval application. The user device is, for example, a personal computing device, a workstation, a client device, a network enabled computing device, any other suitable computing equipment, and combinations of multiple pieces of computing equipment. Advantageously, the user device 206 is a portable user device in order to provide a remote assistance to a user/operator. The information retrieval system 211 disclosed herein is in operable communication with an industrial database over a cloud platform. The industrial database is, for example, a structured query language (SQL) data store or a not only SQL (NoSQL) data store. The industrial database is configured as cloud based database implemented in a cloud computing environment, where computing resources are delivered as a service over the cloud platform. As used herein, "cloud computing environment" refers to a processing environment comprising configurable computing physical and logical resources, for example, networks, servers, storage, applications, services, etc., and data distributed over the cloud platform. The cloud computing environment provides on-demand network access to a shared pool of the configurable computing physical and logical resources. The industrial database, according to another embodiment of the present invention, is a location on a file system directly accessible by the information retrieval system.

According to the present invention, also disclosed herein is a cloud computing system comprising a server and a cloud platform comprising the aforementioned information retrieval system stored therein in the form of machine-readable instructions and executable by the at least one server. The servers or processors may be geographically distributed while being interconnected via a communication network. A dedicated platform, that is, the cloud platform is installed on the servers/processors for providing above functionality of retrieving information/industrial data, as a service such as a cloud service. The cloud computing system further comprising an industrial database comprising industrial data associated with a plurality of graphical objects from at least one industrial plant and/or at least one engineering system associated with the at least one industrial plant. The cloud computing system further comprising at least one application programming interface comprising one or more functions obtaining the industrial data stored in industrial database.

According to the present invention, also disclosed herein, is a cloud computing environment comprising the aforementioned cloud computing system, a user device, an industrial plant, and/or at least one engineering system associated with the industrial plant, communicatively coupled with one another via a communication network.

According to the present invention, also disclosed herein, is a computer program product comprising a machine-readable instructions stored therein, which when executed by at least one server/processor perform the aforementioned method for retrieving industrial data based on one or more graphical objects.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: is a process flowchart illustrating a method for retrieving industrial data associated with one or more graphical objects.
- FIG 1B: is a process flowchart illustrating exemplarily the steps involved in retrieving the industrial data using the method shown in FIG 1A.
- FIG 2A: is a schematic representation of a cloud computing environment, according to one embodiment of the present invention.
- FIG 2B: is a block diagram of an information retrieval system as shown in FIG 2A, according to the embodiment of the present invention.
- FIG 2C: is a schematic representation of components of the cloud computing system as shown in FIG 2A for retrieving industrial data associated with one or more graphical objects, according to an embodiment of present invention.
- FIGS 3A-3F: illustrate screenshots of an interactive graphical user interface provided by the information retrieval system, showing a workflow for retrieving industrial data, according to an embodiment of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

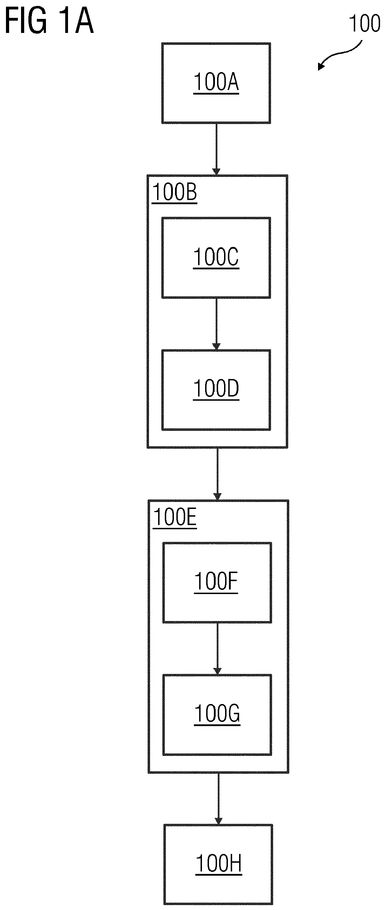

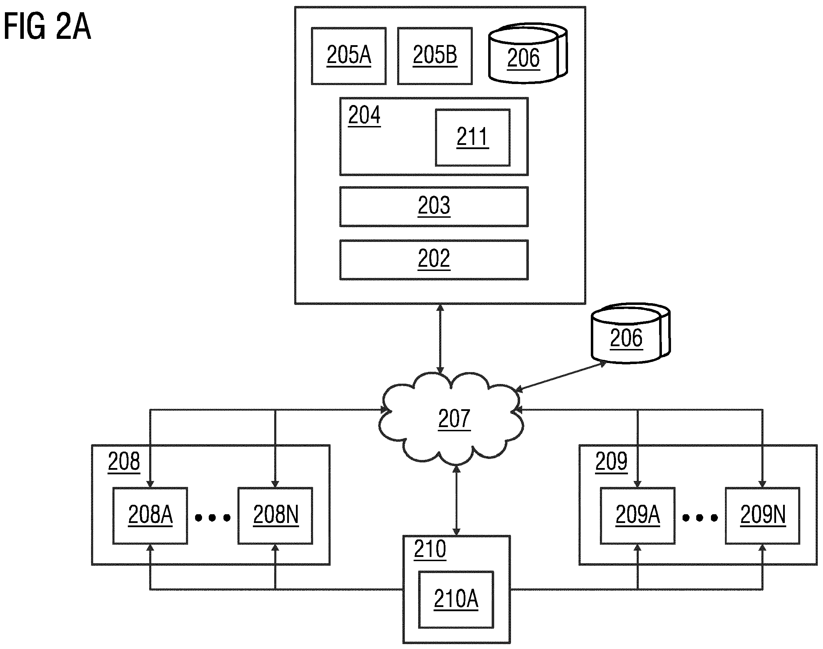

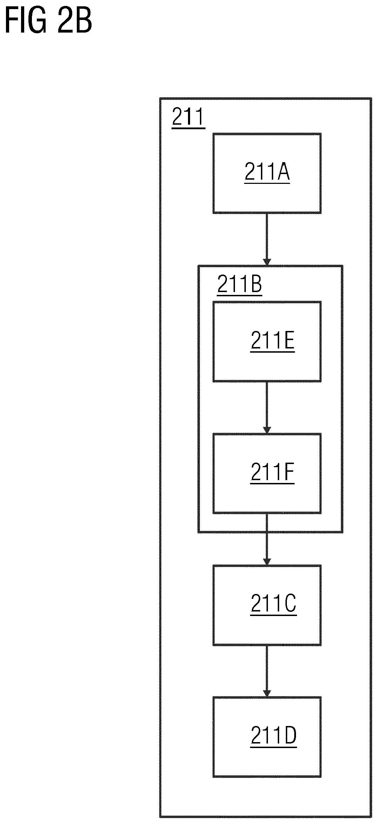

FIG 1A is a process flowchart illustrating a method 100 for retrieving industrial data associated with one or more graphical objects. The method 100 employs an information retrieval system shown in FIG 2B in a cloud computing environment shown in FIG 2A. At step 100A, the method 100 receives image data associated with at least one of the graphical objects from a user device. At step 100B, the method 100 identifies the graphical object based on the image data. For identifying the graphical object the method 100 at step 100C processes the image data to obtain a foreground image data and a background image data from the image data and at step 100D determines a retrieval context associated with background image data. At step 100E, the method 100 obtains the industrial data associated with the identified graphical object, from an industrial database. For obtaining the industrial data associated with the identified graphical object, the method 100 at step 100F, obtains a user profile associated with the user device, and at step 100G, accesses the industrial database based a foreground image data, a background image data, and/or the user profile. At step 100H, the method 100 provides the industrial data associated with the identified graphical object on the user device.

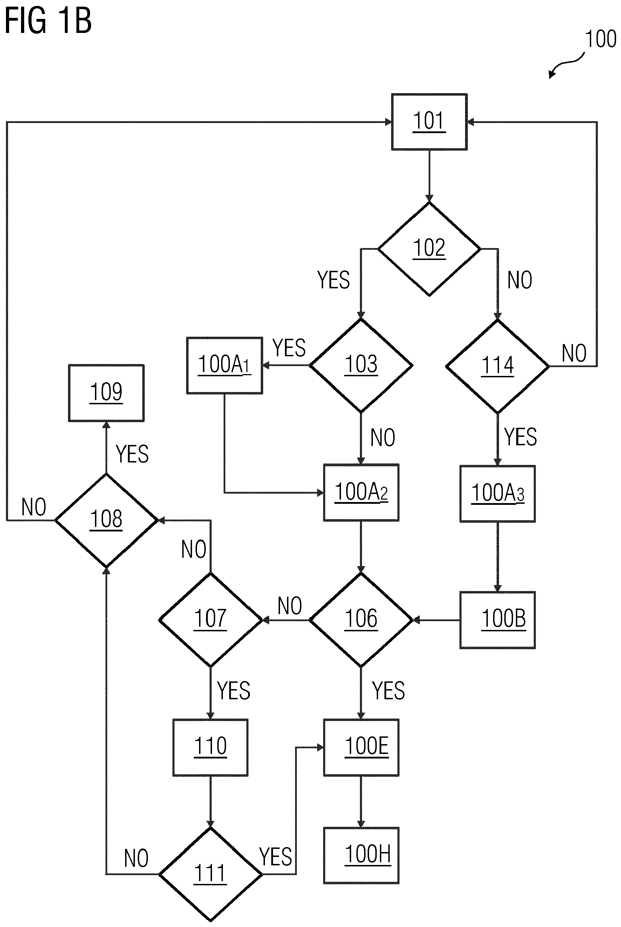

FIG 1B is a process flowchart illustrating exemplarily the steps involved in retrieving the industrial data using the method 100 shown in FIG 1A. Consider an example, where a user such as an operator accesses the information retrieval system employed by the method 100, via a user device, for remotely retrieving industrial data in a factory setup. As shown in FIG 1B, the method 100 at step 101, renders a graphical user interface (GUI) on the user device for receiving a selection from the operator regarding one or more modalities in which he/she would like to provide his/her input in order to retrieve the industrial data, and detects, for example, a touch input via the rendered GUI. At step 102, the method 100, checks whether the received selection is one of an audio input and/or a text input. If yes, then at step 103, the method 100 checks if it is an audio input. If yes, then at step 100A₁, the method 100 receives, that is, records the audio data and converts the recorded speech/voice/audio data into corresponding text data. If not, then at step 100A₂, the method 100 receives the text data from the operator. At step 106, the method 100 using the received input, accesses an industrial database and checks whether an entry is available in the industrial database that matches the received input. If not, then at step 107, the method 100 checks if there is any entry in the industrial database that at least partially matches the received input. If not, then at step 108, the method prompts the operator with a message of "Query found no-match" notification and checks whether the operator would like to enter information about the received input in order to create a new record in the industrial database. If yes, then at step 109, the information is received from the operator and updated in the industrial database on the cloud platform. If not, then the operator is routed back to home page for detecting modality selection input for a new search. If at step 107, there is a partially matching entry found in the industrial database, then at step 110, the method 100 applies an auto-complete algorithm on the received input, for example, by auto-populating the input based on the received input. At step 111, the method 100, checks with the operator whether he/she intended to search for the auto-completed input. If not, then the operator is taken back to step 108 to check for a new record to be created. If yes, then at step 100E, the method 100 obtains the industrial data available for the received input from the industrial database and at step 100H, renders it to the operator on his/her user device.

At step 102, if the received selection is neither of an audio input nor a text input, then the method 100 at step 114, checks whether a video based modality is selected. If not, then the operator is routed back to step 101. If yes, then at step 100A₃, an input is received from the operator in form of an image data that is, either via uploading an existing image, scanning an image, or capturing an image. The method 100 then at step 100B identifies a graphical object based on the image data. The method 100 then routes the control back to step 106 where a check is done based on the identified graphical object for an entry, existing if any, in the industrial database.

FIG 2A is a schematic representation of a cloud computing environment 200, according to one embodiment of the present invention. Particularly, FIG 2A depicts the cloud computing system 201 capable of providing cloud services for retrieving industrial data from an industrial database 206 associated with industrial assets 208A-208N of at least one industrial plant 208, and/or graphical objects 209A-209N of at least one engineering system 209 associated with the industrial plant 208. The cloud computing system 201 is connected to the industrial plant 208, the engineering system 209, and the industrial database 206, via a communication network 207, for example, internet. The industrial assets 208A-208N may include servers, robots, switches, automation devices, motors, valves, pumps, actuators, sensors, programmable logic controllers (PLCs), human machine interfaces (HMIs), and other industrial equipment. Although, FIG 2A illustrates the cloud computing system 201 connected to a single industrial plant 208 and a single engineering system 209, one skilled in the art can envision that the cloud computing system 201 can be connected to several industrial plants 208 and several corresponding engineering systems 209 located at different locations via the communication network 207. The cloud computing system 201 is also connected to at least one user device 210 via the communication network 207. The user device 210 can access the cloud computing system 210 for accessing cloud services, that is, industrial data retrieval services. The user device 210 can be a laptop computer, a desktop computer, a tablet computer, a smart-phone and the like. The user device 210 can access cloud services via graphical user interface 210A. The cloud computing system 210 may be a public cloud, a private cloud, and/or a hybrid cloud configured to provide dedicated cloud services to its users.

The cloud computing system 210 comprises a network interface 202, a server 203 including hardware resources and an operating system, and a cloud platform 204. The network interface 202 enables communication between the cloud computing system 210, the industrial plant 208, and the engineering system 209. Also, the network interface 202 enables communication between the cloud computing system 210 and the user device 210. The server 203 may include one or more servers 203 on which the OS is installed. The servers 203 may comprise one or more processors, one or more storage devices, such as, memory units, for storing data and machine-readable instructions for example, applications 205A and application programming interfaces (APIs) 205B, and other peripherals required for providing cloud computing functionality. The cloud platform 204 is a platform which enables functionalities such as data reception, data processing, data rendering, data communication, etc. using the hardware resources and the OS of the servers 203, and delivers the aforementioned cloud services using the application programming interfaces 205B deployed therein. The cloud platform 204 may comprise a combination of dedicated hardware and software built on top of the hardware and the OS.

According to the present invention, the cloud platform 204 comprises an information retrieval system 211 which retrieves industrial data based on one or more graphical objects 209A-209N from the industrial database 206 via the application programming interfaces 205B without a need for skilled personnel. The information retrieval system 211 is stored in the form of machine-readable instructions on the cloud computing system 210, executable by the processors/server 203. The information retrieval system 211 is explained in greater detail in the description of FIG 2B that follows.

FIG 2B is a block diagram of an information retrieval system 211 as shown in FIG 2A, according to the embodiment of the present invention. The information retrieval system 211 comprises a data reception module 211A, an object identification module 211B, a data retrieval module 211C, and a data provision module 211D.

The information retrieval system 211 is in an operable communication with a user device 210 as shown in FIG 2A. The object identification module 211B comprises an image data processing module 211E and a context determination module 211F.

The data reception module 211A receives image data associated with at least one of the graphical objects (209A-209N) from a user device 210. The object identification module 211B identifies the graphical object 209A-209N based on the image data. The image data processing module 211E processes the image data to obtain a foreground image data and a background image data. The context determination module 211F determines a retrieval context associated with background image data. The data retrieval module 211C obtains the industrial data associated with the identified graphical object 209A-209N, from the industrial database 206 by obtaining a user profile associated with the user device 210, and accessing the industrial database 206 based on the foreground image data, the background image data, and/or the user profile. The data provision module 211D provides the industrial data associated with the identified graphical object 209A-209N on the user device 210 by rendering the industrial data in an interactive and/or a non-interactive format on the user device 210.

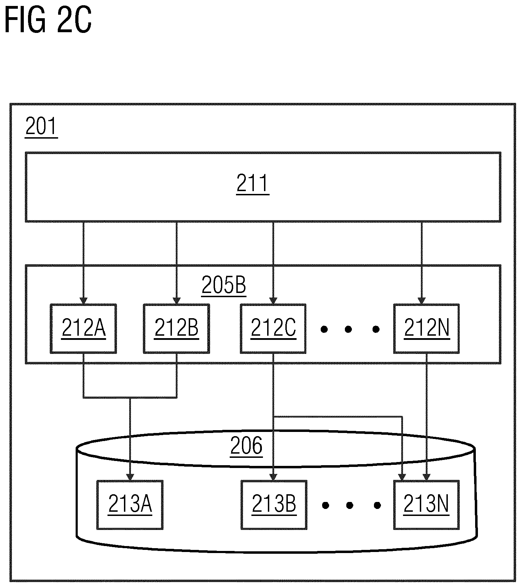

FIG 2C is a schematic representation of components of the cloud computing system 201 as shown in FIG 2A for retrieving industrial data associated with one or more graphical objects 209A-209N, according to an embodiment of present invention. As shown in FIG 2C, the cloud computing system 210 enables users to retrieve industrial data pertaining to graphical objects 209A-209N and/or to industrial assets 208A-208N. The cloud computing system 210 employs the information retrieval system 211, the APIs 205B, and the industrial database 206. The API 205B employs functions 212A-212N which enable the information retrieval system 210 to retrieve industrial data from the industrial database 206. The industrial database 206 comprises data models 213A-213N which store raw and/or aggregated industrial data. It can be noted that each of the data models 213A-213N store industrial data pertaining to a particular graphical object 209A-209N or a particular industrial asset 208A-208N. Also, each of the functions 212A-212N is configured to access one or more data models 213A-213N in the industrial database 206. The information retrieval system 211 enables users to select a modality, for example, audio/video/text, etc., via an interactive graphical user interface 210A displayed on a user device 210. The data access manager 121 automatically captures the selected input 25parameters in a virtual table and transforms the input parameters in the virtual table into an API call. The information retrieval system 211 forwards the API call to the appropriate API 205B responsible for retrieving industrial data. The API 205B invokes one of the functions 212A-212N to retrieve the industrial data based on the received API call. For example, the API 205B used the retrieval context requested from the API call. Then, the API 205B determines a data model which stores the requested industrial data in line with the retrieval context from the plurality of data models 213A-213N stored in the industrial database 206. Finally, the API 205B determines one of the functions 212A-212N which is configured to access the determined data model. The API 205B returns the retrieved industrial data to the information retrieval system 211. The information retrieval system 211 provides the requested industrial data to the user, which is then displayed on the graphical user interface 210A of the user device 210. Alternatively, the information retrieval system 211 may provide the industrial data to a visualization application deployed on the cloud computing system 210 that may in turn process the industrial data and render it on the user device in a specific output format. This visualization may comprise, for example, a layer based display of industrial data categorized based on a level of detail, a level of access allowed as per the user profile, and/or based on an industry reference, that is, organization name, thus, providing deeper insights into the graphical objects 209A-209N. This may enable the operator or field engineer to take further actions for efficient operation, efficient engineering, and efficient commissioning of the industrial plant 208.

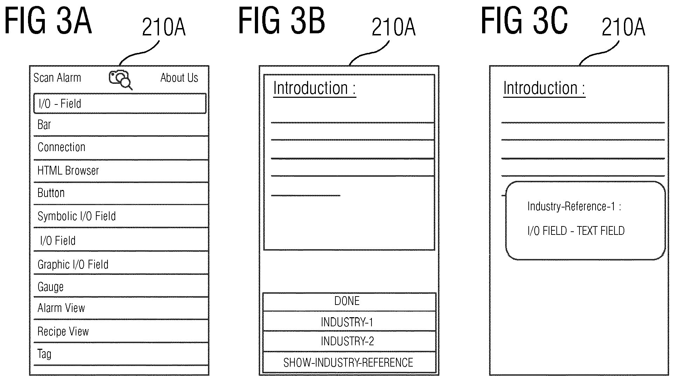

FIGS 3A-3F illustrate screenshots of an interactive graphical user interface 210 provided by the information retrieval system 211 shown in FIG 2A, showing a workflow for retrieving industrial data, according to an embodiment of the present invention. FIGS 3A-3C illustrate screenshots of the graphical user interface 210 showing a workflow for a text based and/or an audio based information retrieval. As shown in FIG 3A, the information retrieval system 211 configured as a mobile application, renders a home page on the user device 210. The home page has a text search field where the user can key in an input, for example, a search term "I/O field". Alternatively, the input can be provided via an audio modality, that is, a voice input. As shown in FIG 3B, the information retrieval system 211 determines that the received input "I/O field" is not present in the data model 213A-213N of the industrial database 206 storing industrial data particular to the industry reference configured for the user profile, but is present for other industry references, that is, in other data models 213A-213N. An option to show other industry references is displayed on the GUI 210 to the user. Assuming, the user selects Industry reference 1, then as shown in FIG 3C, the information retrieval system 211 displays a cross-referenced industrial data informing the user that the input, that is, "I/O field" is referred to as "Text field" as per the standard terminologies used in Industry reference 1.

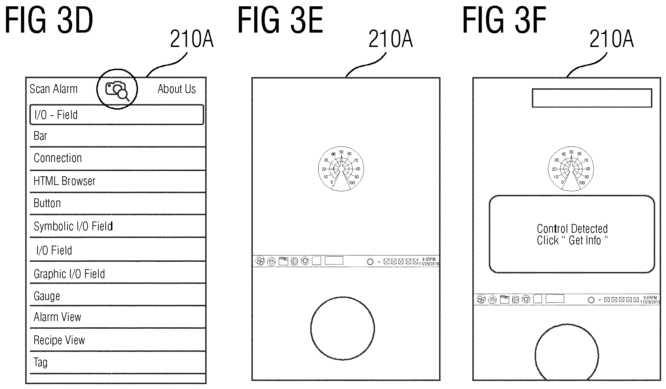

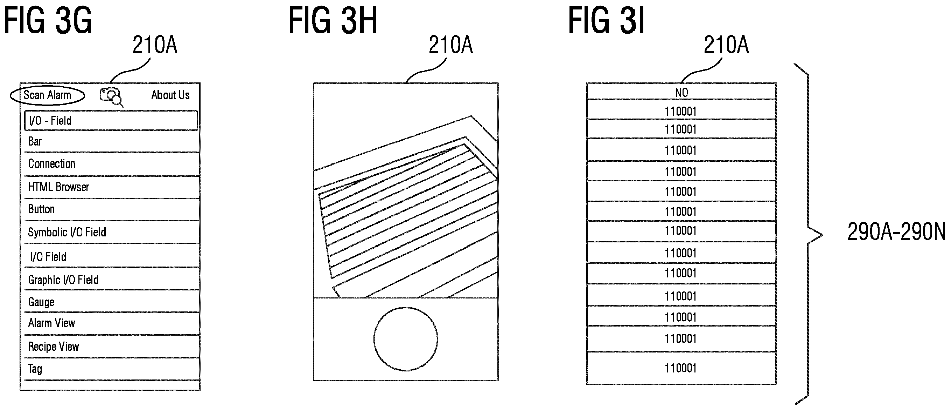

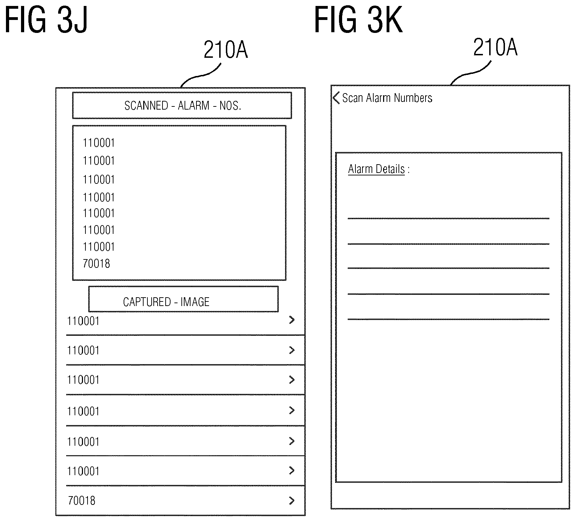

FIGS 3D-3F illustrate screenshots of a graphical user interface 210 provided by the information retrieval system 211 illustrated in FIG 2A, showing a workflow for an image based retrieval of industrial data, according to an embodiment of the present invention. As shown in FIG 3D, the information retrieval system 211 configured as a mobile application renders the home page on the user device 210. Assuming, a user of the user device 210, selects an image based modality for providing his/her input especially via the camera of the user device 210. As shown in FIG 3E, the user accesses a graphical object 209A and captures an image of the same. As shown in FIG 3F, the information retrieval system 211 then processes the captured image received as image data and detects a foreground image data, using which the industrial data is attempted to be retrieved. As shown in FIG 3F, the information retrieval system 211 indicates that the industrial data has been obtained for the captured image and the user can view it by clicking on "Get Info". Alternatively, while the user has made a selection for the image based modality, the user may want to scan graphical objects 209A-209N which is an a list of alarms to retrieve industrial data and therefore, as shown in FIG 3G, on the home page he/she selects the scan alarm option and using the camera of the user device 210 scans a list of alarms being displayed as shown in FIG 3H. The information retrieval system 211 then receives the captured image as shown in FIG 3I and processes the same to obtain a textual input corresponding to the captured image in form of a list of alarm codes as shown in FIG 3J. As shown in FIG 3K, the information retrieval system 211 then retrieves and renders the industrial data associated with the scanned alarm codes on the user device 210.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the industrial database 206, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

### List of reference numerals

- 200 -: Cloud computing environment
- 201 -: Cloud computing system
- 202 -: Network Interface
- 203 -: Server, Hardware resources and OS
- 204 -: Cloud platform
- 205A -: Applications
- 205B -: Application Programming Interfaces (APIs)
- 206 -: Industrial database
- 207 -: Communication Network
- 208 -: Industrial facility/Industrial plant
- 208A-208N -: Industrial assets
- 209 -: Engineering system
- 209A-209N -: Graphical objects representing industrial assets and/or process pertaining to industrial assets
- 210 -: user device/handheld device/portable electronic device
- 210A -: graphical user interface of the user device
- 211 -: information retrieval system
- 211A -: data reception module
- 211B -: object identification module
- 211C -: data retrieval module
- 211D -: data provision module
- 211E -: image data processing module
- 211F -: context determination module
- 212A-212N -: Functions
- 213A-213N -: Data models

## Claims

1. A method (100) for retrieving industrial data based on one or more graphical objects (209A-209N) by employing an information retrieval system (211) in a cloud computing environment (200), said method (100) comprising:
- receiving (100A) image data associated with at least one of the graphical objects (209A-209N) from a user device (210) ;
- identifying (100B) the at least one graphical object (209A-209N) based on the image data;
- obtaining (100E) the industrial data associated with the identified graphical object (209A-209N), from an industrial database (206); and
- providing (100H) the industrial data associated with the identified graphical object (209A-209N) on the user device (210) .

2. The method (100) according to claim 1, wherein the graphical object (209A-209N) comprises a representation of one or more industrial assets, and a representation of one or more parameters associated with the industrial assets.

3. The method (100) according to claim 1, wherein identifying the at least one graphical object (209A-209N) comprises:
- processing (100C) the image data to obtain a foreground image data and a background image data from the image data; and
- determining (100D) a retrieval context associated with background image data.

4. The method (100) according to any one of the claims 1 and 3, wherein obtaining the industrial data associated with the identified graphical object (209A-209N) comprises:
- obtaining (100F) a user profile associated with the user device (210); and
- accessing (100G) the industrial database (206) based on one or more of a foreground image data, a background image data, and the user profile.

5. The method (100) according to claim 1, wherein providing the industrial data associated with the identified graphical object (209A-209N) comprises rendering the industrial data in one of an interactive and a non-interactive format on the user device (210) .

6. An information retrieval system (211) comprising:
a memory unit (302) storing computer program instructions defined by modules (211A-211D) of said information retrieval system (211);
at least one processor (301) communicatively coupled to said memory unit (302), said at least one processor (301) executing said defined computer program instructions; and
said modules (211A-211D) comprising:
- a data reception module (211A) configured to receive image data associated with at least one of the graphical objects (209A-209N) from a user device (210), wherein the graphical object (209A-209N) comprises a representation of one or more industrial assets, and a representation of one or more parameters associated with the industrial assets;
- an object identification module (211B) configured to identify the at least one graphical object (209A-209N) based on the image data;
- a data retrieval module (211C) configured to obtain the industrial data associated with the identified graphical object (209A-209N), from an industrial database (206); and
- a data provision module (211D) configured to provide the industrial data associated with the identified graphical object (209A-209N) on the user device (210).

7. The information retrieval system (211) according to the claim 6, wherein the object identification module (211B) is comprises:
- an image data processing module (211E) configured to process the image data to obtain a foreground image data and a background image data from the image data; and
- a context determination module (211F) configured to determine a retrieval context associated with background image data.

8. The information retrieval system (211) according to the any one of the claims 6 and 7, wherein the data retrieval module (211C) is further configured to:
- obtain a user profile associated with the user device (210); and
- access the industrial database (206) based on one or more of a foreground image data, a background image data, and the user profile.

9. The information retrieval system (211) according to the claim 6, wherein the data provision module (211D) is further configured to render the industrial data in one of an interactive and a non-interactive format on the user device (210) .

10. A cloud computing system (201) comprising:
- a server (203); and
- a cloud platform (204) comprising an information retrieval system (211) stored therein in the form of machine-readable instructions and executable by the at least one server (203), wherein the information retrieval system (211) is configured to perform a method according claims 1-5.

11. The cloud computing system (201) according to claim 10, further comprising an industrial database (206) comprising industrial data associated with a plurality of graphical objects (209A-209N) from one or more of at least one industrial plant (208) and at least one engineering system (209) associated with the at least one industrial plant (208).

12. The cloud computing system (201) according to claim 10, further comprising at least one application programming interface (205A) comprising one or more functions (212A-212N) configured to obtain the industrial data stored in industrial database (206).

13. A cloud computing environment (200) comprising:
- a cloud computing system (201) according to claims 6-8;
- a user device (210) communicatively coupled to the system (201); and
- one or more of an industrial plant (208) and at least one engineering system (209) associated with the industrial plant (208).

14. The cloud computing environment (200) according to claim 13, wherein the user device (210) is configured to receive and render via its graphical user interface (210A) the industrial data associated with the graphical objects (209A-209N).

15. A computer program product comprising machine-readable instructions stored therein, that when executed by one or more servers (203), cause the one or more servers (203) to perform a method according to claims 1-5.
